# EUROPÄISCHE PATENTANMELDUNG

(11) **EP 2 028 740 A1**
(43) Veröffentlichungstag der Anmeldung: **25.02.2009**
(21) Anmeldenummer: 08006727.5
(22) Anmeldetag: 02.04.2008
(51) Int. Cl.: H02G 3/08

(54) **Einbaudose für elektrische Installationen**

(30) Priorität: 23.08.2007 DE 202007011809 U; 10.09.2007 DE 202007012669 U
(71) Anmelder: Kaiser GmbH & Co. KG, 58579 Schalksmuehle (DE)
(72) Erfinder:
(74) Vertreter: Köchling, Conrad-Joachim

(57) **Zusammenfassung**

Um eine Einbaudose (1), insbesondere Unterputzdose, für elektrische Installationen, mit einem Dosenboden (2) und einer vom Dosenboden (2) abragenden Dosenwandung (3), wobei die Dosenwandung (3) im bodennahen Bereich durchmessergroße erste Lochungen (4) zur Installation von Installationsrohren, im bodenfernen Bereich durchmesserkleine zweite Lochungen (5) zum Einführen von Kabeln und im Mittelbereich in vorzugsweise abgeflachten Bereichen (6) der Dosenwandung (3) nach außen vorragende Anschlussstutzen (7,8) mit die Wandung durchsetzenden dritten Lochungen (9,10) aufweist, die vornehmlich zur Installation von Installationsrohren dienen, zu schaffen, die äußerst formstabil ist und auch beim Eingipsen in entsprechende Wandungsöffnungen sich nicht verformt, wird vorgeschlagen, dass die Einbaudose (1) aus Polystyrol besteht.

## Beschreibung

Die Erfindung betrifft eine Einbaudose, insbesondere Unterputzdose, für elektrische Installationen, mit einem Dosenboden und einer vom Dosenboden abragenden Dosenwandung, wobei die Dosenwandung im bodennahen Bereich durchmessergroße erste Lochungen zur Installation von Installationsrohren, im bodenfernen Bereich durchmesserkleine zweite Lochungen zum Einführen von Kabeln und im Mittelbereich in vorzugsweise abgeflachten Bereichen der Dosenwandung nach außen vorragende Anschlussstutzen mit die Wandung durchsetzenden dritten Lochungen aufweist, die vornehmlich zur Installation von Installationsrohren dienen.

Derartige Einbaudosen sind aus der DE 102 53 252 A1 bekannt. Im Stand der Technik ist es üblich, solche Einbaudosen aus thermoplastischen Kunststoffen zu fertigen, beispielsweise Polypropylen.

Solche Einbaudosen haben den Nachteil, dass sie beim bestimmungsgemäßen Einbau in entsprechende Wandungsöffnungen zur Verformung neigen, wenn diese Wandungsöffnungen mit Gips ausgefüllt werden oder mit ähnlichen Materialien, um die Einbaudose in der entsprechenden Öffnung der Wandung zu fixieren. Sofern nach erfolgtem Einbau der Einbaudose diese aber nicht ausreichend formhaltig ist, bereitet es Schwierigkeiten, normgerechte Installationseinsätze in solche Einbaudosen einzubringen.

Ausgehend von diesem Stand der Technik liegt der Erfindung die Aufgabe zugrunde, eine Einbaudose gattungsgemäßer Art zu schaffen, die äußerst formstabil ist und auch beim Eingipsen in entsprechende Wandungsöffnungen sich nicht verformt. Dabei ist zu beachten, dass eine geringe Wandstärke der Einbaudose eingehalten werden muss, da eine solche Wandstärke durch die Einbaubedingungen begrenzt und bestimmt ist.

Zur Lösung dieser Aufgabe schlägt die Erfindung vor, dass die Einbaudose aus Polystyrol besteht.

Dadurch, dass die Einbaudose aus Polystyrol gefertigt ist, wird ein äußerst formhaltiger, stabiler Dosenkörper zur Verfügung gestellt, der auch dann nicht zur Verformung neigt, wenn er bestimmungsgemäß in einer Wandöffnung eingegipst wird. Dabei kann eine geringe Wandstärke eingehalten werden, da trotz der geringen Wandstärke ein ausreichender Widerstand gegen Verformungen der Einbaudose erreicht wird.

Um sicherzustellen, dass durch die Lochungen der Einbaudose beim Eingipsen oder dergleichen kein Gips oder ähnliches Material in den Doseninnenraum gelangt, ist vorgesehen, dass die Lochungen jeweils durch eine Membran aus Elastomer überdeckt und geschlossen sind, die am Dosenkörper angeformt ist.

Hierdurch wird zudem bei bestimmten Einbaumaßnahmen eine Winddichtigkeit erreicht, auch und insbesondere dann, wenn Kabel oder dergleichen Installationsteile die Membran durchstoßend vorgesehen werden. Die Membran legt sich dann dicht an den Mantel des Kabels oder dergleichen an, so dass die Winddichte gewährleistet ist.

Besonders bevorzugt ist dabei vorgesehen, dass die Membran aus Styrol-Ethylen-Butylen-Styrol-Blockpolymer besteht.

Gerade diese Materialauswahl führt dazu, dass beim Einbau und beim Eingipsen der Einbaudose mit Sicherheit der Zutritt von Gips oder dergleichen in den Doseninnenraum verhindert ist, wobei dennoch durch diese Materialauswahl erreicht ist, dass der Monteur, der beispielsweise Kabel oder Rohre durch die Lochungen führen will, die Membran leicht und mit geringer Kraft durchstoßen kann.

Bevorzugt ist dabei vorgesehen, dass die Membran eine Wandstärke von 0,4 bis 0,8 mm aufweist.

Eine solche Wandstärkenbemessung ist einerseits für die ausreichende Festigkeit der Membran bei der Montage und beim Eingipsen ausreichend und andererseits wird eine relativ leichte Durchstoßbarkeit der Membran durch Kabel oder Rohre erreicht.

Zudem ist bevorzugt vorgesehen, dass das Material der Membran ein Shore-Härte A von 25 bis 50 aufweist.

Auch diese Auswahl ist für den angegebenen Bestimmungszweck hervorragend brauchbar.

Um einen sicheren Sitz der Membran im Bereich der Lochungen zu gewährleisten, ist vorgesehen, dass die Membran jeweils auf den die Lochung umgebenden Rand und/oder die Lochlaibung aufgeformt ist.

Üblicherweise erfolgt die Herstellung im so genannten 2K-Spritzverfahren, bei dem zunächst der Dosenkörper aus Polystyrol urgeformt wird und anschließend die Membran urgeformt wird, wobei der Rand der Membran auf den Lochungsrand aufgeformt wird.

Eine bevorzugte Weiterbildung wird darin gesehen, dass der Lochungsrand der ersten Lochungen in einem oberen Bereich nach radial außen versetzt ist, so dass der Soll-Innendurchmesser der Einbaudose im oberen Bereich eingehalten ist, und in einem unteren Bereich nach radial innen versetzt ist, so dass der Soll-Innendurchmesser der Einbaudose in diesem Bereich unterschritten ist, und dass die Membran derart auf den Lochungsrand aufgeformt ist, dass der Rand im oberen Bereich der ersten Lochungen über das Nennmaß des Dosenmantels vorragt und im unteren Bereich nur bis zum Nennmaß auf den Lochungsrand aufgeformt ist, gegebenenfalls unter Aufformung einer elastischen Kante am Rand der Membran, die geringfügig über das Nennmaß vorsteht.

Durch diese Ausbildung wird sichergestellt, dass in dem oberen Einsatzbereich der Einbaudose, der für den Einsatz von elektrotechnischen Einbauten bestimmt ist, das von der Norm bestimmte Maß eingehalten wird.

Andererseits ist im unteren Bereich, der lediglich zum Einführen von Installationsrohren und/oder Kabeln bestimmt ist, die Einengung des Innenraums der Einbaudose ohne Nachteile für deren Benutzung möglich. Zudem ist es durch diese Anordnung möglich, später noch beschriebene Einrichtungen auf den Dosenmantel aufzubringen, wie diese im Stand der Technik an sich bekannt sind.

Insgesamt schlägt die Erfindung hierzu vor, dass ein Klemmbügel mit einem ringartigen Halteteil und mindestens zwei vom Halteteil axial abragenden Haltearmen vorgesehen ist, welches mit dem Halteteil vom Dosenboden her auf den Dosenmantel aufschiebbar ist und zwar über den unteren Bereich der ersten Lochungen bis nahe des oberen Endbereiches der Lochungen, in welchem die Membran mit ihrem Rand auf den nach radial außen versetzten Teil des Lochungsrandes aufgeformt ist.

Solche Klemmbügel sind im Stand der Technik an sich bekannt. Um solche Klemmbügel auch mit dieser erfindungsgemäßen Einbaudose kombinieren zu können, sind die Ränder der Lochungen, die von der Membran überspritzt werden, im unteren Bereich der Einbaudose nach radial innen versetzt, so dass der entsprechende Klemmbügel mit seinem ringartigen Halteteil zwängungsfrei auf die Dose aufgeschoben werden kann. Der Aufschub erfolgt vorzugsweise bis zu dem Bereich, indem die Membranränder geringfügig nach außen versetzt sind durch die entsprechenden nach außen versetzten Randbereiche der Lochungen. In diesem Bereich wird einerseits der erwünschte Einbauraum innerhalb der Dose eingehalten und andererseits wird durch diese Ausbildung quasi ein Anschlag für die Einstecktiefenbegrenzung des Klemmbügels gebildet.

Bevorzugt ist dabei vorgesehen, dass das ringartige Halteteil des Klemmbügels aus einem Ringteil besteht, das sich parallel zum Dosenmantel erstreckt und an diesem anliegt, sowie aus vom Ringteil radial abragenden Anschlagsegmenten.

Zudem ist bevorzugt vorgesehen, dass die zweiten Lochungen einen nach radial außen versetzten Lochungsrand aufweisen, auf den der Rand der Membran jeweils aufgeformt ist.

Auch hierbei ist das wesentliche Augenmerk, den Innenraum der Dose im Nennmaß zu gestalten, so dass also durch die aufgebrachte Membran der Innenraum der Dose nicht unter das Normmaß eingeengt wird, weil nämlich die Lochungsränder der zweiten Lochungen nach radial außen versetzt sind, so dass keine Einengung des Innenraumes der Dose erfolgt.

Bezüglich der Anschlussstutzen ist es üblich, dass diese so bemessen sind, dass einerseits Installationsrohre mit einem Außendurchmesser von 25 mm und andererseits Installationsrohre mit einem Außendurchmesser von 20 mm eingesetzt werden können und sicher gehalten werden können.

Hierzu schlägt die Erfindung vor, dass die Anschlussstutzen eine lichte Weite von etwa 25 mm aufweisen, so dass ein Installationsrohr mit einem Außendurchmesser von 25 mm in diese einsteckbar ist, wobei am dosenwandungsseitigen Ende des Anschlussstutzens ein nach radial innen vorspringender Rand angeformt ist, auf den der Rand einer die dritte Lochung überdeckenden Membran aufgeformt ist und an dem sich die Mündung eines 25 mm Installationsrohres abstützt, wobei in den Anschlussstutzen alternativ ein Installationsrohr mit einem Außendurchmesser von 20 mm einsteckbar ist, dessen Mündung die Membran und die dritte Lochung durchgreift oder durchgreifen kann, so dass die aufgerissene Membran am Außenmantel des Installationsrohres dichtend anliegt.

Zum Einsatz eines Installationsrohres mit einem Außendurchmesser von 25 mm wird dieses in den Anschlussstutzen eingebracht, bis der Mündungsrand an dem nach radial innen vorspringenden Rand der Lochung anliegt. In diesem Bereich ist das Material der Membran vorgesehen, so dass hierdurch eine Mündungsabdichtung des eingesteckten Installationsrohres erfolgt.

Sofern ein Rohr mit einem Außendurchmesser von 20 mm eingesteckt wird, so wird durch dieses Rohr die Membran aufgerissen, so dass das Rohr durch die geschaffene Öffnung durchgesteckt werden kann. In diesem Falle liegt die Membran dichtend am Außenmantel des Installationsrohres an.

Die Lagesicherung des Rohres mit Außendurchmesser von
20 mm erfolgt insbesondere auch durch den nach radial innen vorspringenden Rand, der sich ebenfalls am Mantel des Rohres abstützt.

Zusätzlich ist vorgesehen, dass am Anschlussstutzen Rasthaken angeformt sind, die rastend am Mantel eines eingesteckten 25 mm Installationsrohres angreifen.

Hierdurch ist sichergestellt, dass beim Einsatz eines
25 mm Installationsrohres in den Anschlussstutzen dieses Installationsrohr in der Montagesollposition sicher gehalten ist, indem die Rasthaken oder der Rasthaken entsprechend rastend am Mantel des Rohres angreift. Solche Installationsrohre sind häufig als so genannte Wellrohre ausgebildet, so dass ein entsprechender Widerhalt für den Rasthaken gebildet ist.

Um das Durchstoßen der Membran zu erleichtern, insbesondere das Durchstoßen der Membran im Bereich der ersten Lochungen, die zur Rohreinführung bestimmt sind, ist vorgesehen, dass die Membran, insbesondere die Membran der ersten Lochungen, Sollreißbereiche aufweist.

Dadurch, dass die Membran an bestimmten Stellen Sollreißbereiche aufweist, ist das Durchstoßen der Membran beispielsweise mittels eines von Hand eingeführten Rohres oder auch mittels eines zugeführten Kabels in einfacher Weise mit manueller Kraft zu bewerkstelligen.

Vorzugsweise ist dabei vorgesehen, dass die Sollreißbereiche durch Materialverjüngungen der Membran gebildet sind.

Hierbei kann insbesondere vorgesehen sein, dass die Sollreißbereiche durch Kerben in der Membran gebildet sind.

Durch die Materialverjüngungen, insbesondere Kerben, werden bevorzugte Sollreißbereiche zur Verfügung gestellt, die beim Einführen von Rohren oder dergleichen aufreißen und das Einschieben in den Innenraum der Einbaudose erleichtern.

Bevorzugt ist zudem vorgesehen, dass die Sollreißbereiche kreuzartig im Mittelbereich der Membran ausgebildet sind.

Obwohl die kreuzförmige Anordnung der Sollreißbereiche bevorzugt ist, sind auch andere geometrische Gestaltungen möglich und brauchbar.

Ausführungsbeispiele der Erfindung sind in der Zeichnung dargestellt und im Folgenden näher beschrieben.

Es zeigt:

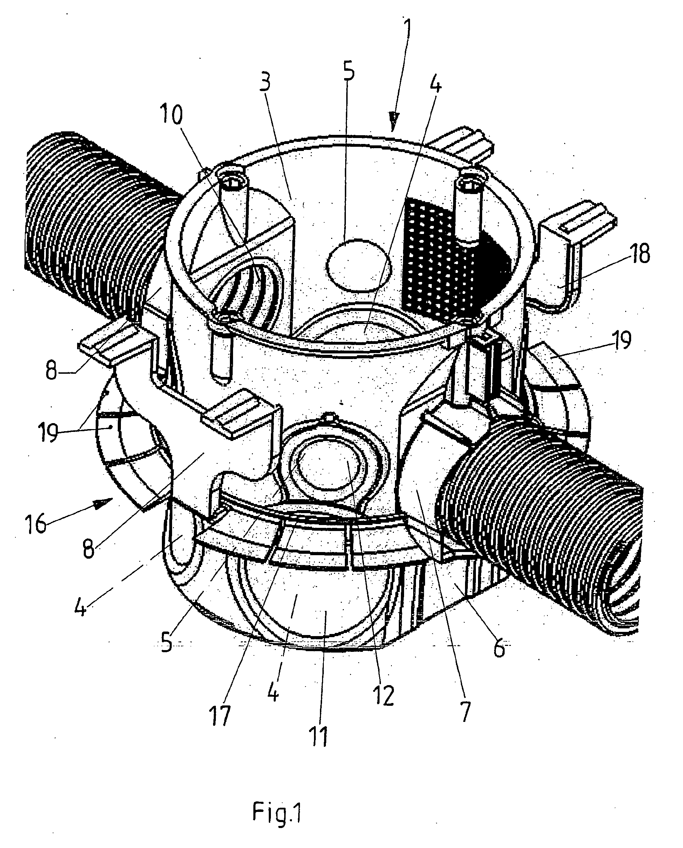

- Figur 1: eine erfindungsgemäße Einbaudose in Schrägansicht;
- Figur 2: desgleichen in Seitenansicht teilweise geschnitten;
- Figur 3: eine Ausschnittsvergrößerung der Figur 3 in Einzeldarstellung;
- Figur 4: eine Einbaudose in Schrägansicht;
- Figur 5: die Einbaudose in Seitenansicht im Schnitt gesehen;
- Figur 6: eine Einzelheit der Figur 5 in vergrößerter Ansicht;
- Figur 7: eine Einzelheit der Figur 6 in vergrößerter Ansicht;
- Figur 8: eine Einbaudose in Schrägansicht;
- Figur 9: die Einbaudose in Seitenansicht im Schnitt gesehen;
- Figur 10: eine vergrößerte Darstellung einer Einzelheit der Figur 9;
- Figur 11: eine Einbaudose in Seitenansicht;
- Figur 12: eine vergrößerte Einzelheit der Figur 11 im Schnitt gesehen.

In den Figuren ist eine Einbaudose 1, insbesondere eine Unterputzdose, für elektrische Installationen gezeigt. Die Einbaudose 1 weist einen Dosenboden 2 und eine vom Dosenboden 2 abragende Dosenwandung 3 auf. Die Dosenwandung 3 weist im bodennahen Bereich durchmessergroße erste Lochungen 4 auf, die vornehmlich zur Installation von Installationsrohren dienen. Im mündungsnahen Bereich sind durchmesserkleine zweite Lochungen 5 ausgebildet, die vornehmlich zum Einführen von Kabeln dienen. Im Mittelbereich sind in abgeflachten Bereichen 6 einander gegenüberliegend nach radial außen vorragende Anschlussstutzen 7,8 an die Wandung 3 angeformt. Diese weisen wiederum die Wandung durchsetzende Lochungen 9 bzw. 10 auf. Diese Anschlussstutzen dienen zur Anordnung von Installationsrohren.

Erfindungsgemäß ist die Einbaudose 1 ein aus Polystyrol gefertigtes Kunststoffformteil. Die Lochungen 4,5,9,10 sind jeweils durch eine Membran 11,12,13 aus elastomerem Kunststoff überdeckt und geschlossen, wobei die Membranen am Dosenkörper angeformt sind. Insbesondere besteht jede Membran 11,12,13 aus Styrol-Ethylen-Butylen-Styrol-Blockpolymer, welches aufgrund seiner Stabilität, Durchstoßbarkeit und Shore-Härte besonders geeignet ist. Die Membranen weisen vorzugsweise eine Wandstärke von 0,4 bis 0,8 mm auf.

Jede Membran 11,12,13 ist auf dem die jeweilige Lochung 4,5,9,10 umgebenden Rand und/oder an der Lochlaibung angeformt bzw. aufgeformt.

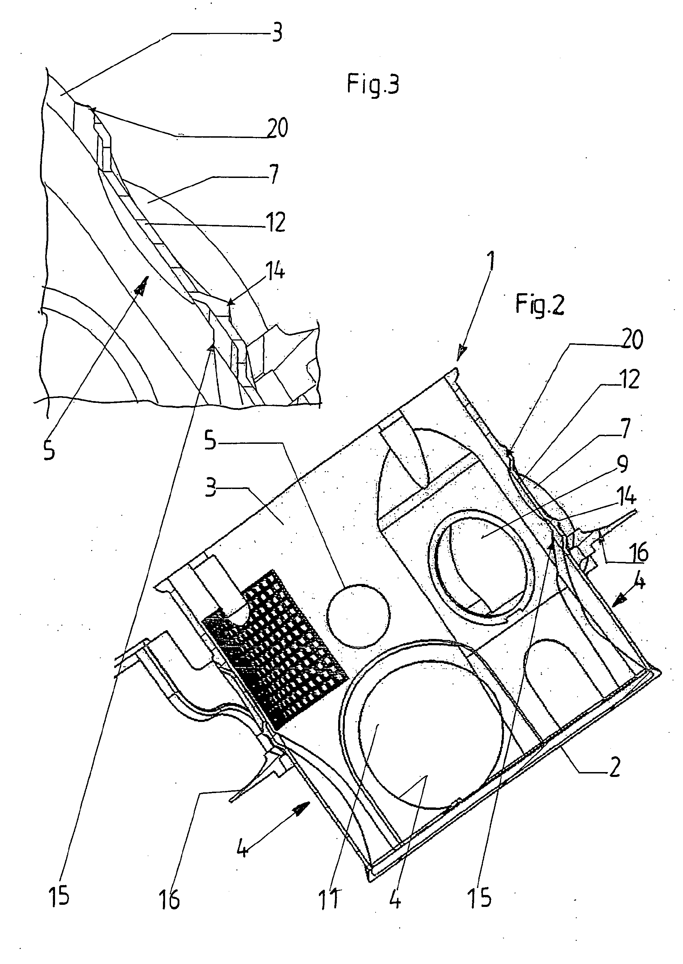

Wie insbesondere aus Figur 2 und 3 ersichtlich, ist der Lochungsrand der ersten Lochungen 4 in einem oberen Bereich 14 nach radial außen versetzt, so dass der Sollinnendurchmesser der Einbaudose 1 im oberen Bereich auf jeden Fall eingehalten ist. In einem unteren Bereich 15 ist der Lochungsrand nach radial innen versetzt, so dass der Sollinnendurchmesser der Einbaudose in diesem Bereich unterschritten ist. Die Membran 11 ist so auf den Lochungsrand aufgeformt, dass der Rand im oberen Bereich der ersten Lochungen 4 über das Nennmaß des Dosenmantels vorragt und im unteren Bereich nur bis zum Nennmaß auf den Lochungsrand aufgeformt ist, gegebenenfalls unter Aufformung einer elastischen Kante am Rand der Membran 4, die geringfügig über das Nennmaß vorsteht.

Auf diese Weise ist es möglich, einen Klemmbügel 16 mit einem ringartigen Halteteil 17 mit mindestens zwei vom Halteteil axial abragenden Haltearmen 18 aufzubringen, indem das Halteteil 17 vom Dosenboden her auf den Dosenmantel aufgeschoben wird, und zwar über den unteren Bereich der ersten Lochungen 4, bis nahe deren oberen Ende, in welchem Bereich die Membran 11 mit ihrem Rand auf den nach radial außen versetzten Teil des Lochungsrandes aufgeformt ist. Das ringartige Halteteil 17 des Klemmbügels 16 liegt parallel zum Dosenmantel. Von diesem ragen radial Anschlagsegmente 19 ab.

Die zweiten Lochungen 5 weisen ebenfalls einen nach radial außen versetzten Lochungsrand 20 auf, auf den der Rand der Membran 12 aufgeformt ist, so dass der Innenraum der Einbaudose 1 trotz der Anordnung der Membran Sollmaß einhält.

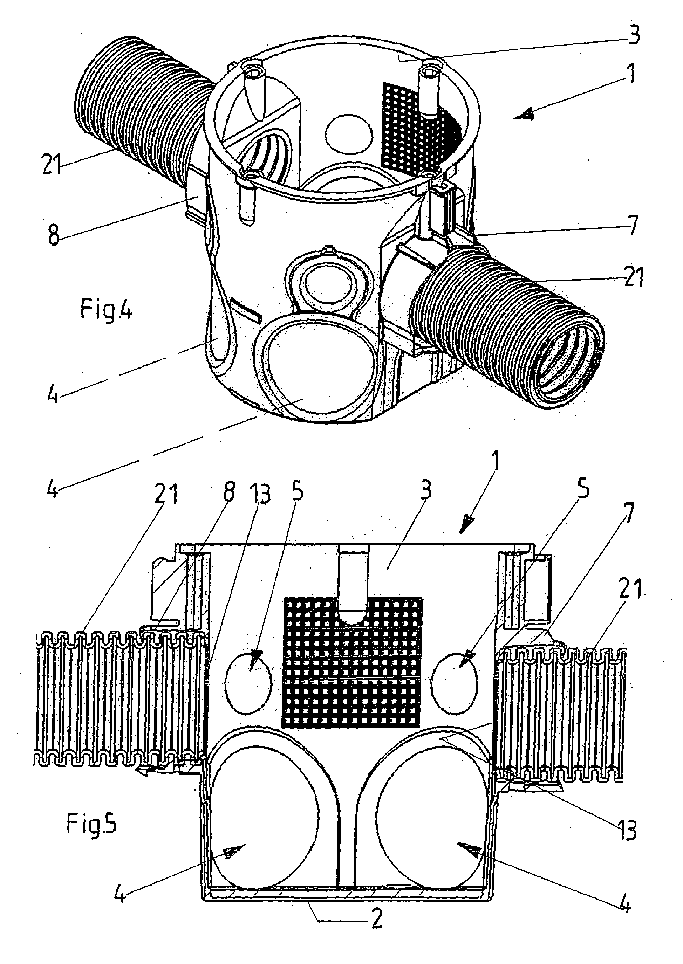

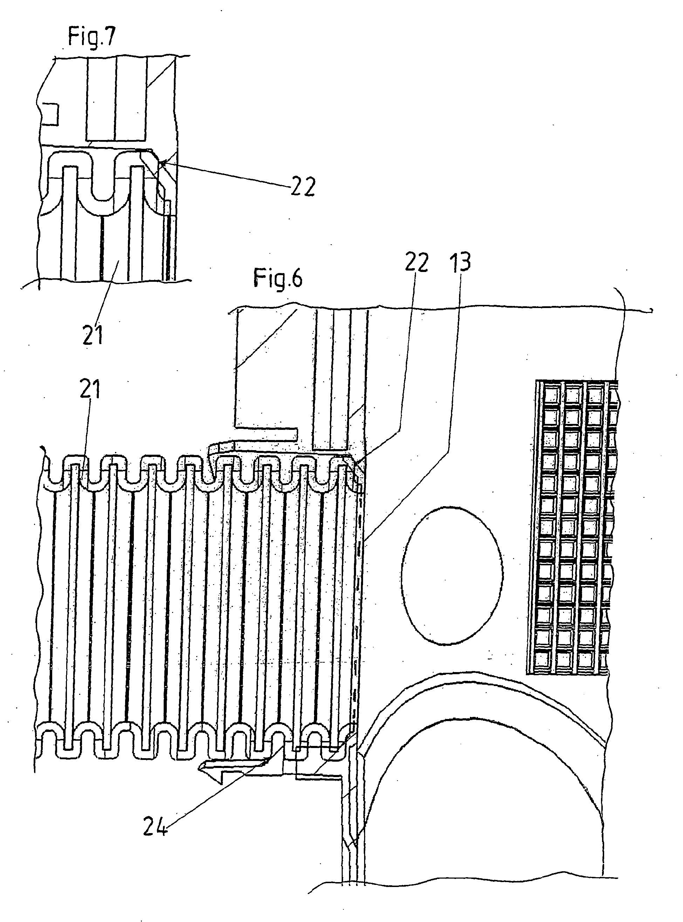

Wie insbesondere aus den Figuren 4 bis 10 ersichtlich, können an die Anschlussstutzen 7,8 entsprechende Installationsrohre angeschlossen werden. Hierzu weisen die Anschlussstutzen 7,8 eine solche lichte Weite auf, dass ein Installationsrohr 21 mit einem Außendurchmesser von 25 mm in diese einsteckbar ist. Am dosenwandungsseitigen Ende des jeweiligen Anschlussstutzens 7 bzw. 8 ist ein nach radial innen zur Lochung vorspringender Rand 22 angeformt, auf den der Rand einer die dritte Lochung 10 überdeckenden Membran 13 aufgeformt ist. In der Einbausituation, die in Figur 5,6 und 7 gezeigt ist, stützt sich die Mündung des Installationsrohres 21 an dieser Membran 13 im Bereich des Randes 22 ab, so dass eine Dichtigkeit erreicht ist.

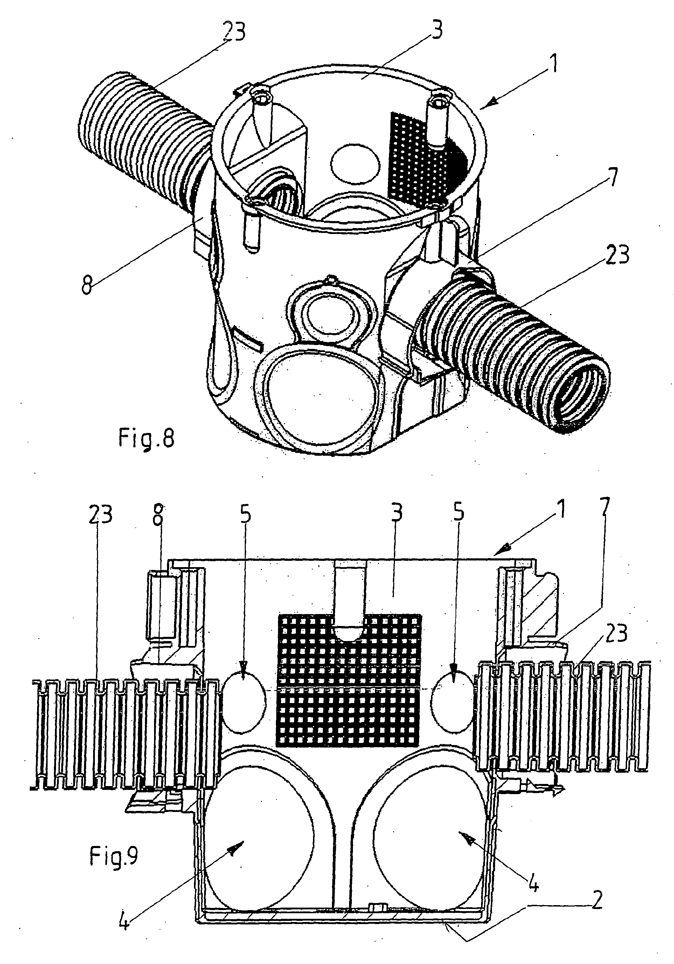

Alternativ kann ein Installationsrohr mit einem Durchmesser von 20 mm eingesteckt werden, wie dies in Figur 8 bis 10 gezeigt ist.

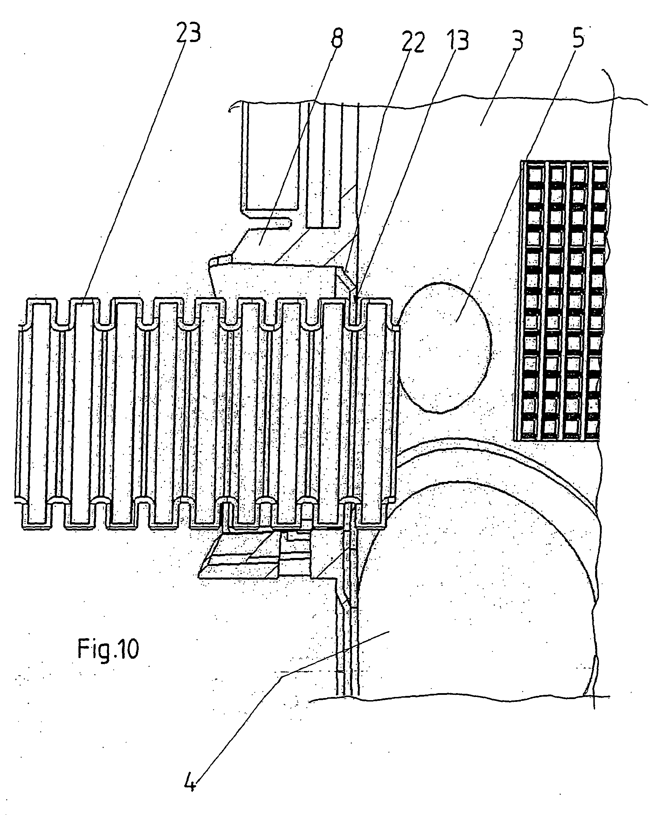

Das Installationsrohr 23 kann in den entsprechenden Anschlussstutzen 7 bzw. 8 eingesteckt werden, wobei dessen Mündung die Membran und die entsprechende Lochung durchsetzt, so dass in der Montagesolllage, wie sie beispielsweise in Figur 10 ersichtlich ist, die aufgerissene Membran 13 am Außenmantel des Installationsrohres 23 dichtend anliegt.

Eine ausreichende Lagesicherung des Installationsrohres 23 ist dadurch gegeben, dass dieses sich im dosenseitigen Endbereich an der Randkante 22 abstützt.

Zur Sicherung der Installationslage des Rohres 21 mit einem 25 mm Durchmesser ist am Anschlussstutzen 7 bzw. 8 die Anordnung von Rasthaken 24 vorgesehen, wobei der jeweilige Rasthaken 24 am Mantel des eingesteckten Installationsrohres 21 mit 25 mm Durchmesser angreift.

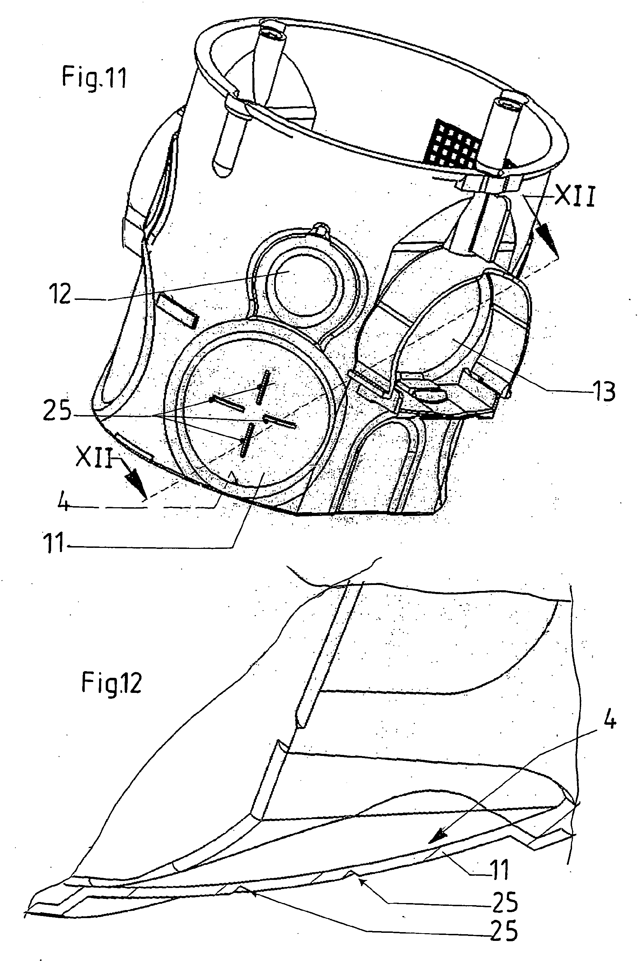

Wie insbesondere in Figur 11 und 12 dargestellt, weisen die Membranen 11,12,13, vornehmlich aber die Membran 11, die die ersten Lochungen 4 überdeckt, Sollreißbereiche 25 auf. Diese dienen dazu, das Einführen von Durchstoßen von Rohren im Bereich der ersten Lochungen 4 zu vereinfachen, da die Sollreißbereiche beim Zuführen von Rohren oder dergleichen erleichtert aufreißen und somit der manuelle Vorgang des Einführens der Rohre erleichtert ist.

Vorzugsweise sind diese Sollreißbereiche 25 durch Materialverjüngungen der Membran 11,12,13 gebildet. Wie insbesondere aus der Schnittdarstellung gemäß Figur 12 ersichtlich, sind die Sollreißbereiche 25 durch Kerben in der Membran 11 gebildet, wobei wie insbesondere aus Figur 11 ersichtlich, die Sollreißbereiche 25 etwa kreuzartig im Mittelbereich der Membran ausgebildet sind. Eine solche Anordnung und Ausbildung ist bevorzugt, wobei auch andere Geometrien und Anordnungen möglich sind.

Die Erfindung stellt eine Einbaudose gattungsgemäßer Art zur Verfügung, die außerordentlich formstabil ist, die eine abgedichtete Anordnung in einer Wandungsöffnung oder dergleichen ermöglicht und bei der das Durchstoßen von Dichtmembranen durch Kabel oder Installationsrohre in einfacher Weise möglich ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Einbaudose (1), insbesondere Unterputzdose, für elektrische Installationen, mit einem Dosenboden (2) und einer vom Dosenboden(2) abragenden Dosenwandung (3), wobei die Dosenwandung (3) im bodennahen Bereich durchmessergroße erste Lochungen (4) zur Installation von Installationsrohren, im bodenfernen Bereich durchmesserkleine zweite Lochungen (5) zum Einführen von Kabeln und im Mittelbereich in vorzugsweise abgeflachten Bereichen (6) der Dosenwandung (3) nach außen vorragende Anschlussstutzen (7,8) mit die Wandung durchsetzenden dritten Lochungen (9,10) aufweist, die vornehmlich zur Installation von Installationsrohren dienen,
**dadurch gekennzeichnet, dass** die Einbaudose (1) aus Polystyrol besteht.

2. Einbaudose nach Anspruch 1, **dadurch gekennzeichnet, dass** die Lochungen (4,5,9,10) jeweils durch eine Membran (11,12,13) aus Elastomer überdeckt und geschlossen sind, die am Dosenkörper angeformt ist.

3. Einbaudose nach Anspruch 2, **dadurch gekennzeichnet, dass** die Membran (11,12,13) aus Styrol-Ethylen-Butylen-Styrol-Blockpolymer besteht.

4. Einbaudose nach Anspruch 2 oder 3,
**dadurch gekennzeichnet, dass** die Membran (11,12,13) eine Wandstärke von 0,4 bis 0,8 mm aufweist.

5. Einbaudose nach einem der Ansprüche 2 bis 4,
**dadurch gekennzeichnet, dass** das Material der Membran (11,12,13) ein Shore-Härte A von 25 bis 50 aufweist.

6. Einbaudose nach einem der Ansprüche 2 bis 5,
**dadurch gekennzeichnet, dass** die Membran (11,12,13) jeweils auf den die Lochung umgebenden Rand und/oder die Lochlaibung aufgeformt ist.

7. Einbaudose nach einem der Ansprüche 2 bis 6,
**dadurch gekennzeichnet, dass** der Lochungsrand der ersten Lochungen (4) in einem oberen Bereich nach radial außen versetzt ist, so dass der Soll-Innendurchmesser der Einbaudose (1) im oberen Bereich eingehalten ist, und in einem unteren Bereich nach radial innen versetzt ist, so dass der Soll- Innendurchmesser der Einbaudose (1) in diesem Bereich unterschritten ist, und dass die Membran (11) derart auf den Lochungsrand aufgeformt ist, dass der Rand im oberen Bereich der ersten Lochungen (4) über das Nennmaß des Dosenmantels (3) vorragt und im unteren Bereich nur bis zum Nennmaß auf den Lochungsrand aufgeformt ist, gegebenenfalls unter Aufformung einer elastischen Kante am Rand der Membran (11), die geringfügig über das Nennmaß vorsteht.

8. Einbaudose nach Anspruch 7, **dadurch gekennzeichnet, dass** ein Klemmbügel (16) mit einem ringartigen Halteteil (17) und mindestens zwei vom Halteteil (17) axial abragenden Haltearmen (18) vorgesehen ist, welches mit dem Halteteil (17) vom Dosenboden (2) her auf den Dosenmantel (3) aufschiebbar ist und zwar über den unteren Bereich der ersten Lochungen (4) bis nahe des oberen Endbereiches der Lochungen (4), in welchem die Membran (11) mit ihrem Rand auf den nach radial außen versetzten Teil des Lochungsrandes aufgeformt ist.

9. Einbaudose nach Anspruch 8, **dadurch gekennzeichnet, dass** das ringartige Halteteil (17) des Klemmbügels (16) aus einem Ringteil besteht, das sich parallel zum Dosenmantel (3) erstreckt und an diesem anliegt, sowie aus vom Ringteil radial abragenden Anschlagsegmenten (19).

10. Einbaudose nach einem der Ansprüche 2 bis 9, **dadurch gekennzeichnet, dass** die zweiten Lochungen (5) einen nach radial außen versetzten Lochungsrand aufweisen, auf den der Rand der Membran (12) jeweils aufgeformt ist.

11. Einbaudose nach einem der Ansprüche 1 bis 10, **dadurch gekennzeichnet, dass** die Anschlussstutzen (7,8) eine lichte Weite von etwa 25 mm aufweisen, so dass ein Installationsrohr (21) mit einem Außendurchmesser von 25 mm in diese einsteckbar ist, wobei am dosenwandungsseitigen Ende des Anschlussstutzens (7,8) ein nach radial innen vorspringender Rand (22) angeformt ist, auf den der Rand einer die dritte Lochung (9,10) überdeckenden Membran (13) aufgeformt ist und an dem sich die Mündung eines 25 mm Installationsrohres (21) abstützt, wobei in den Anschlussstutzen (7,8) alternativ ein Installationsrohr (23) mit einem Außendurchmesser von 20 mm einsteckbar ist, dessen Mündung die Membran (13) und die dritte Lochung (9,10) durchgreift oder durchgreifen kann, so dass die aufgerissene Membran (13) am Außenmantel des Installationsrohres (23) dichtend anliegt.

12. Einbaudose nach Anspruch 11,
**dadurch gekennzeichnet, dass** am Anschlussstutzen (7,8) Rasthaken (24) angeformt sind, die rastend am Mantel eines eingesteckten 25 mm Installationsrohres (21) angreifen.

13. Einbaudose nach einem der Ansprüche 2 bis 12, **dadurch gekennzeichnet, dass** die Membran (11,12,13), insbesondere die Membran (11) der ersten Lochungen (4), Sollreißbereiche (25) aufweist.

14. Einbaudose nach Anspruch 13, **dadurch gekennzeichnet, dass** die Sollreißbereiche (25) durch Materialverjüngungen der Membran (11,12,13) gebildet sind.

15. Einbaudose nach Anspruch 13 oder 14,
**dadurch gekennzeichnet, dass** die Sollreißbereiche (25) durch Kerben in der Membran (11,12,13) gebildet sind.

16. Einbaudose nach einem der Ansprüche 13 bis 15, **dadurch gekennzeichnet, dass** die Sollreißbereiche (25) kreuzartig im Mittelbereich der Membran (11,12,13) ausgebildet sind.

## Geänderte Patentansprüche

### Geänderte Patentansprüche gemäss Regel 137(2) EPÜ.

**1.** Einbaudose (1), insbesondere Unterputzdose, für elektrische Installationen, mit einem Dosenboden (2) und einer vom Dosenboden(2) abragenden Dosenwandung (3), wobei die Dosenwandung (3) im bodennahen Bereich durchmessergroße erste Lochungen (4) zur Installation von Installationsrohren, im bodenfernen Bereich durchmesserkleine zweite Lochungen (5) zum Einführen von Kabeln und im Mittelbereich in vorzugsweise abgeflachten Bereichen (6) der Dosenwandung (3) nach außen vorragende Anschlussstutzen (7,8) mit die Wandung durchsetzenden dritten Lochungen (9,10) aufweist, die vornehmlich zur Installation von Installationsrohren dienen,
**dadurch gekennzeichnet, dass** die Einbaudose (1) aus Polystyrol besteht, dass die Lochungen (4,5,9,10) jeweils durch eine Membran (11,12,13) aus Elastomer überdeckt und geschlossen sind, die am Dosenkörper angeformt ist, dass der Lochungsrand der ersten Lochungen (4) in einem oberen Bereich nach radial außen versetzt ist, so dass der Soll-Innendurchmesser der Einbaudose (1) im oberen Bereich eingehalten ist, und in einem unteren Bereich nach radial innen versetzt ist, so dass der Soll-Innendurchmesser der Einbaudose (1) in diesem Bereich unterschritten ist, und dass die Membran (11) derart auf den Lochungsrand aufgeformt ist, dass der Rand im oberen Bereich der ersten Lochungen (4) über das Nennmaß des Dosenmantels (3) vorragt und im unteren Bereich nur bis zum Nennmaß auf den Lochungsrand aufgeformt ist, gegebenenfalls unter Aufformung einer elastischen Kante am Rand der Membran (11), die geringfügig über das Nennmaß vorsteht.

**2.** Einbaudose nach Anspruch 1, **dadurch gekennzeichnet, dass** die Membran (11,12,13) aus Styrol-Ethylen-Butylen-Styrol-Blockpolymer besteht.

**3.** Einbaudose nach Anspruch 1 oder 2, **dadurch gekennzeichnet, dass** die Membran (11,12,13) eine Wandstärke von 0,4 bis 0,8 mm aufweist.

**4.** Einbaudose nach einem der Ansprüche 1 bis 3, **dadurch gekennzeichnet, dass** das Material der Membran (11,12,13) ein Shore-Härte A von 25 bis 50 aufweist.

**5.** Einbaudose nach einem der Ansprüche 1 bis 4, **dadurch gekennzeichnet, dass** die Membran (11,12,13) jeweils auf den die Lochung umgebenden Rand und/oder die Lochlaibung aufgeformt ist.

**6.** Einbaudose nach Anspruch 1, **dadurch gekennzeichnet, dass** ein Klemmbügel (16) mit einem ringartigen Halteteil (17) und mindestens zwei vom Halteteil (17) axial abragenden Haltearmen (18) vorgesehen ist, welches mit dem Halteteil (17) vom Dosenboden (2) her auf den Dosenmantel (3) aufschiebbar ist und zwar über den unteren Bereich der ersten Lochungen (4) bis nahe des oberen Endbereiches der Lochungen (4), in welchem die Membran (11) mit ihrem Rand auf den nach radial außen versetzten Teil des Lochungsrandes aufgeformt ist.

**7.** Einbaudose nach Anspruch 6, **dadurch gekennzeichnet, dass** das ringartige Halteteil (17) des Klemmbügels (16) aus einem Ringteil besteht, das sich parallel zum Dosenmantel (3) erstreckt und an diesem anliegt, sowie aus vom Ringteil radial abragenden Anschlagsegmenten (19).

**8.** Einbaudose nach einem der Ansprüche 1 bis 7, **dadurch gekennzeichnet, dass** die zweiten Lochungen (5) einen nach radial außen versetzten Lochungsrand aufweisen, auf den der Rand der Membran (12) jeweils aufgeformt ist.

**9.** Einbaudose nach einem der Ansprüche 1 bis 8, **dadurch gekennzeichnet, dass** die Anschlussstutzen (7,8) eine lichte Weite von etwa 25 mm aufweisen, so dass ein Installationsrohr (21) mit einem Außendurchmesser von 25 mm in diese einsteckbar ist, wobei am dosenwandungsseitigen Ende des Anschlussstutzens (7,8) ein nach radial innen vorspringender Rand (22) angeformt ist, auf den der Rand einer die dritte Lochung (9,10) überdeckenden Membran (13) aufgeformt ist und an dem sich die Mündung eines 25 mm Installationsrohres (21) abstützt, wobei in den Anschlussstutzen (7,8) alternativ ein Installationsrohr (23) mit einem Außendurchmesser von 20 mm einsteckbar ist, dessen Mündung die Membran (13) und die dritte Lochung (9,10) durchgreift oder durchgreifen kann, so dass die aufgerissene Membran (13) am Außenmantel des Installationsrohres (23) dichtend anliegt.

**10.** Einbaudose nach Anspruch 9, **dadurch gekennzeichnet, dass** am Anschlussstutzen (7,8) Rasthaken (24) angeformt sind, die rastend am Mantel eines eingesteckten 25 mm Installationsrohres (21) angreifen.

**11.** Einbaudose nach einem der Ansprüche 1 bis 10, **dadurch gekennzeichnet, dass** die Membran (11,12,13), insbesondere die Membran (11) der ersten Lochungen (4), Sollreißbereiche (25) aufweist.

**12.** Einbaudose nach Anspruch 11, **dadurch gekennzeichnet, dass** die Sollreißbereiche (25) durch Materialverjüngungen der Membran (11,12,13) gebildet sind.

**13.** Einbaudose nach Anspruch 11 oder 12, **dadurch gekennzeichnet, dass** die Sollreißbereiche (25) durch Kerben in der Membran (11,12,13) gebildet sind.

**14.** Einbaudose nach einem der Ansprüche 11 bis 13, **dadurch gekennzeichnet, dass** die Sollreißbereiche (25) kreuzartig im Mittelbereich der Membran (11,12,13) ausgebildet sind.
